# EUROPEAN PATENT APPLICATION

(11) **EP 2 525 603 A1**
(43) Date of publication of application: **21.11.2012**
(21) Application number: 11732884.9
(22) Date of filing: 12.01.2011
(51) Int. Cl.: H04W 36/08, H04W 16/16, H04W 36/24

(54) **MOBILE STATION DEVICE, MOBILE COMMUNICATION SYSTEM, AND PROGRAM**

(30) Priority: 14.01.2010 JP 2010005821
(71) Applicant: Sharp Kabushiki Kaisha, Osaka-shi, Osaka 545-8522 (JP)
(72) Inventor: KOBAYASHI Hirokazu, Osaka-shi Osaka 545-8522 (JP); SAWADA Shinichi, Osaka-shi Osaka 545-8522 (JP); SUZUKI Shigeto, Osaka-shi Osaka 545-8522 (JP); SUZUKI Koki, Osaka-shi Osaka 545-8522 (JP); YOSHIHARA Akio, Osaka-shi Osaka 545-8522 (JP)
(74) Representative: Hoffmann, Jörg Peter
(86) International application number: PCT/JP2011/050342
(87) International publication number: WO 2011/087014

(57) **Abstract**

A mobile station device is configured to wirelessly communicate with a plurality of base station devices. In case that a base station device selected as a base station device to be reselected is a base station device on which the mobile station device is prohibited to camp, and has reported an indication of prohibition to reselect a base station device using the same frequency, the mobile station device is configured to delay application of the indication of prohibition, and to apply the indication of prohibition when the mobile station device performs transmission.

## Description

### TECHNICAL FIELD

The present invention relates to a mobile station device, a mobile communication system, and a program.
Priority is claimed on Japanese Patent Application No. 2010-005821, filed January 14, 2010, the content of which is incorporated herein by reference.

### BACKGROUND ART

Regarding W-CDMA (Wideband Code Division Multiple Access), LTE (Long Term Evolution), and LTE-A (LTE-Advanced), introduction of a small Home (e)NodeB has been considered for expansion of service areas, personal use, or the like. Cells served by the Home (e)NodeB include an open cell to which all users are allowed access, a CSG cell (Closed Subscriber Group cell) which allows specific users to access thereto, and a hybrid cell having both characteristics of the open cell and the CSG cell. Currently, the standardization thereof is in progress by 3GPP (3rd Generation Partnership Project). Requirements for the CSG cells are defined on the eighth section of Non-Patent Document 1.

If a UE (User Equipment), which has failed to camp on the best ranked cell determined to be the most adequate cell to be reselected as a result of measuring neighboring cells, camps on a cell having the same frequency as that of the best rank cell and performs communication with that cell, this communication causes interference with communication performed in the best ranked cell. As a method of solving such an interference problem, an IFRI (Intra Frequency Reselection Indicator) for the best ranked cell to prohibit a UE from camping on a cell having the same frequency as that of the best ranked cell for a predetermined duration has been introduced in the 3GPP (see, for example, RRC messages on section 6.2 of Non-Patent Document 2).

The IFRI is an indicator of whether to allow reselection of a cell having the same frequency as that of the best ranked cell in case that the best ranked cell is a CSG cell, and a user fails to camp on that cell because the user is not allowed access thereto even though that cell is the best ranked call. The IFRI is reported by broadcast information. If the IFRI indicates "not allowed," that is, if it is prohibited to camp on a cell having the same frequency, a UE is forcibly caused to reselect a cell having a different frequency (inter-frequency cell). In case that the best ranked cell is a CSG cell, however, if the IFRI is applied to a UE failing to camp on that cell, all other CSG cells having the same frequency (intra frequency CSG cells) are excluded from cells to be reselected, thereby causing deterioration of service quality in some cases.

To solve this problem, Non-Patent Document 3 has proposed a method of delaying application of the IFRI until a timer expires. Thereby, the best ranked cell might be changed while a UE is in motion, and therefore there is a possibility that the UE will camp on a new best ranked cell.
If a timer expires while it is still prohibited to camp on the best ranked cell, however, a UE applies the IFRI and reselects a cell having a different frequency in order to avoid interference.

### CITATION LIST

### [Non-Patent Document]

[Non-Patent Document 1] 3GPP TS 22.011 v8.8.0: "Service accessibility"
[Non-Patent Document 2] 3GPP TS 36.331 v8.6.0: "Radio Resource Control (RRC)-Protocol Specification"
[Non-Patent Document 3] 3GPP RAN2#67 R2-094673: "Discussion on Applying IFRI to non-CSG member UE"
[Non-Patent Document 4] 3GPP TS 36.304 v8.6.0: "User Equipment (UE) procedures in idle mode"

### DISCLOSURE OF THE INVENTION

### Problems to be Solved by the Invention

Regarding the technology disclosed in Non-Patent Document 3, however, a mobile station device does not apply IFRI immediately after receiving the IFRI from a CSG cell, and delays the application timing using a timer. Thereby, it is possible to camp on another cell having the same frequency and to make it easier to find another intra frequency CSG cell. However, if, by the time the timer expires, communication, such as verbal communication, is initiated with another cell having the same frequency (such as a macro cell) as that of the CSG cell to which the IFRI has been reported, interference from a mobile station device performing communication with the macro cell to the CSG cell to which the IFRI has been reported occurs.

The present invention has been made in view of such situations. An object of the present invention is to provide a mobile station device, a mobile communication system, and a program, which can prevent interference from occurring while it is prohibited to reselect a base station device having the same frequency.

### Means for Solving the Problems

(1) The present invention has been made to solve the above problem. One embodiment of the present invention is a mobile station device configured to wirelessly communicate with a plurality of base station devices. In case that a base station device selected as a base station device to be reselected is a base station device on which the mobile station device is prohibited to camp, and has reported an indication of prohibition to reselect a base station device using the same frequency, the mobile station device is configured to delay application of the indication of prohibition, and to apply the indication of prohibition when the mobile station device performs transmission.

(2) Additionally, regarding the mobile station device according to another aspect of the present invention, in case that the mobile station device delays application of the indication of prohibition and performs transmission, the mobile station device is configured to select a base station device targeted for the transmission, from among a plurality of base station devices using frequencies different from the frequency used by the base station device selected as the base station device to be reselected.

(3) Additionally, regarding the mobile station device according to another aspect of the present invention, the mobile station device is configured not to apply the indication of prohibition in case that the base station device selected as the base station device to be reselected is a base station device on which the mobile station device is allowed to camp.

(4) Additionally, regarding the mobile station device according to another aspect of the present invention, the transmission from the mobile station device is based on a paging signal from a base station device on which the mobile station device currently camps.

(5) Additionally, regarding the mobile station device according to another aspect of the present invention, the transmission from the mobile station device is based on a request for communication with the base station device, which is made by the mobile station device.

(6) Additionally, regarding the mobile station device according to another aspect of the present invention, in case that the mobile station device delays application of the indication of prohibition and a predetermined duration elapses, the mobile station device is configured to apply the indication of prohibition.

(7) Additionally, regarding the mobile station device according to another aspect of the present invention, in case that the base station device selected as the base station device to be reselected is a base station device on which the mobile station device is prohibited to camp, and has reported the indication of prohibition to reselect a base station device using the same frequency, and in case that a transmission request is made from the mobile station device, and the transmission request is made by a user operating the mobile station device, the mobile station device is configured to give the user a notification that transmission is impossible.

(8) Further, another aspect of the present invention is a mobile communication system including: a plurality of base station devices; and a mobile station device configured to wirelessly communicate with a plurality of base station devices. In case that a base station device selected as a base station device to be reselected is a base station device on which the mobile station device is prohibited to camp, and has reported an indication of prohibition to reselect a base station device using the same frequency, the mobile station device is configured to delay application of the indication of prohibition, and to apply the indication of prohibition when the mobile station device performs transmission.

(8) Moreover, another aspect of the present invention is a program causing a computer of a mobile station device configured to wirelessly communicate with a plurality of base station devices to execute: a process of, in case that a base station device selected as a base station device to be reselected is a base station device on which the mobile station device is prohibited to camp, and has reported an indication of prohibition to reselect a base station device using the same frequency, delaying application of the indication of prohibition and applying the indication of prohibition when the mobile station device performs transmission.

### Effects of the Invention

According to the present invention, while it is prohibited to reselect a base station device having the same frequency, the indication of prohibition is not applied until the mobile station device performs transmission, thereby preventing interference from occurring.

### BRIEF DESCRIPTION OF THE DRAWINGS

FIG. 1 is a conceptual diagram illustrating a mobile communication system according to a first embodiment of the present invention.
FIG. 2 is a schematic block diagram illustrating a configuration of a mobile station device 10 according to the first embodiment.
FIG. 3 is a flowchart illustrating operation of a camp-on controller 144 according to the first embodiment.
FIG. 4 is a flowchart illustrating operation of a paging signal detector 143 according to the first embodiment.
FIG. 5 is a flowchart illustrating operation of a communication request detector 141 according to the first embodiment.
FIG. 6 is a diagram illustrating an example of a traveling route for a mobile station device 10 according to the first embodiment.
FIG. 7 a schematic block diagram illustrating a configuration of a mobile station device 10a according to the first embodiment of the present invention.
FIG. 8 is a flowchart illustrating operation of a timer unit 145a according to the first embodiment.
FIG. 9 is a schematic block diagram illustrating a configuration of a mobile station device 10b according to a second embodiment of the present invention.
FIG. 10 is a flowchart illustrating operation of a communication request detector 141 b according to the second embodiment.

### BEST MODE FOR CARRYING OUT THE INVENTION

### [First Embodiment]

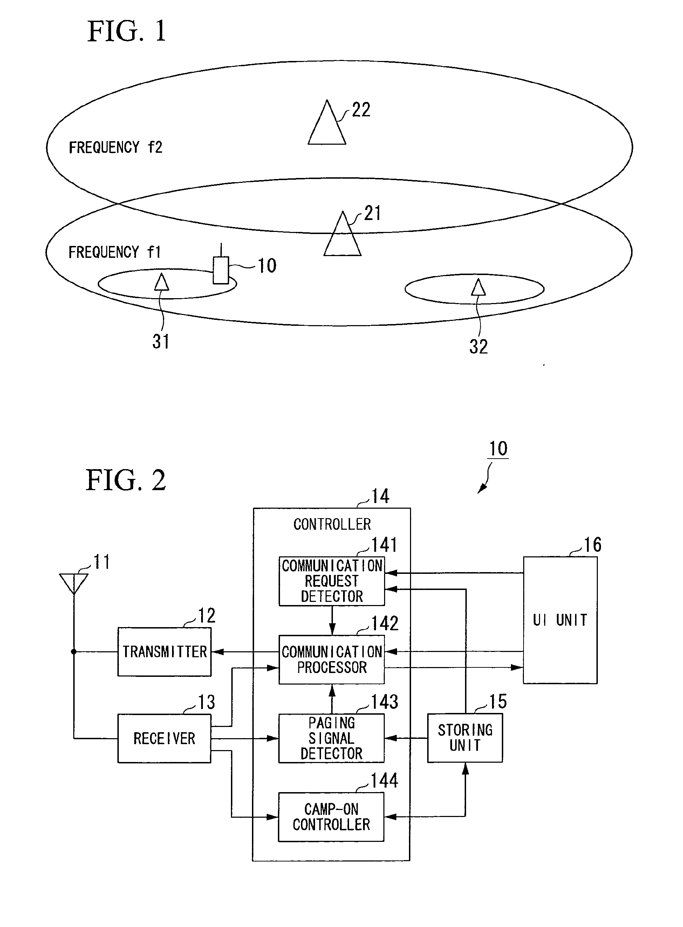

Hereinafter, a first embodiment of the present invention is explained. FIG. 1 is a conceptual diagram illustrating a configuration of a mobile communication system according to the first embodiment. The mobile communication system according to the first embodiment includes: a mobile station device 10; base station devices 21 and 22; and CSG base station devices 31 and 32. The base station device 21 is a base station device serving a macro cell using a frequency f1. The base station device 22 is a base station device serving a macro cell using a frequency f2 different from the frequency f1. The CSG base station devices 31 and 32 are base station devices serving CSG cells using the frequency f1. Additionally, the cell served by the base station device 21 overlaps the cell served by the base station device 22. In that overlapping area, the CSG cells served by the CSG base station devices 31 and 32 are present. The mobile station device 10 is a UE according to the first embodiment. The mobile station device 10 has not been registered on the CSG base station device 31 and therefore cannot camp thereon. However, the mobile station device 10 has been registered on the CSG base station device 32 and therefore can camp thereon. Here, "camped on" means a state in which a mobile station device in an idle mode is monitoring a paging signal to be transmitted from that base station device, which corresponds to a camped normally state defined in 3GPP TS 36.304 (Evolved Universal Terrestrial Radio Access (E-UTRA); User Equipment (UE) procedure in idle mode). Further, the mobile communication system according to the first embodiment includes only one mobile station device 10, but may include multiple mobile station devices. Moreover, two base station devices and two CSG base station devices are included, but three or more base station devices or only one base station device may be included.

FIG. 2 is a schematic block diagram illustrating a configuration of the mobile station device 10 according to the first embodiment. As shown in FIG. 2, the mobile station device 10 includes: an antenna 11; a transmitter 12; a receiver 13; a controller 14; a storing unit 15; and a UI (User Interface) unit 16. The controller 14 includes: a communication request detector 141; a communication processor 142; a paging signal detector 143; and a camp-on controller 144. The antenna 11 transmits and receives radio signals among the base station devices 21 and 22, and the CSG base station devices 31 and 32. The transmitter 12 modulates transmission data to be transmitted to a base station device, upconverts the modulated transmission data into a radio frequency signal, and then transmits the radio frequency signal via the antenna 11. The receiver 13 downconverts a signal received from a base station device via the antenna 11 into a baseband frequency signal, and then demodulates the baseband frequency signal to obtain reception data. The controller 14 controls each unit of the mobile station device 10. The storing unit 15 stores information to control each unit, such as IFRI information indicating an intra frequency reselection indicator received from a base station device, and a CSG list (allowed CSG list, CSG white list) storing identification information (such as CSG_ID) of a CSG base station device available to the mobile station device 10. The UI unit 16 includes: key buttons for receiving inputs by user operation; a microphone for receiving information from a user; and a display and a speaker for outputting information to a user.

The communication request detector 141 detects a request for transmission to a base station device by receiving an input by user operation via the UI unit 16, such as operation of sending a mail or operation of making a phone call. The communication processor 142 performs a process of communicating with a base station device via the transmitter 12 and the receiver 13. Regarding transmission data of transmission data and reception data to be subjected to the communication process, the UI unit 16 generates the transmission data based on an input by user operation and an input of information. Reception data received from the receiver 13 is output to the UI unit 16. The paging signal detector 143 detects that the receiver 13 has received a paging signal from a base station device. The camp-on controller 144 determines a base station device to be camped on while the mobile station device 10 is in the idle mode. Then, the camp-on controller 144 sets a reception frequency and the like so that the receiver 13 receives a paging signal from the base station device.

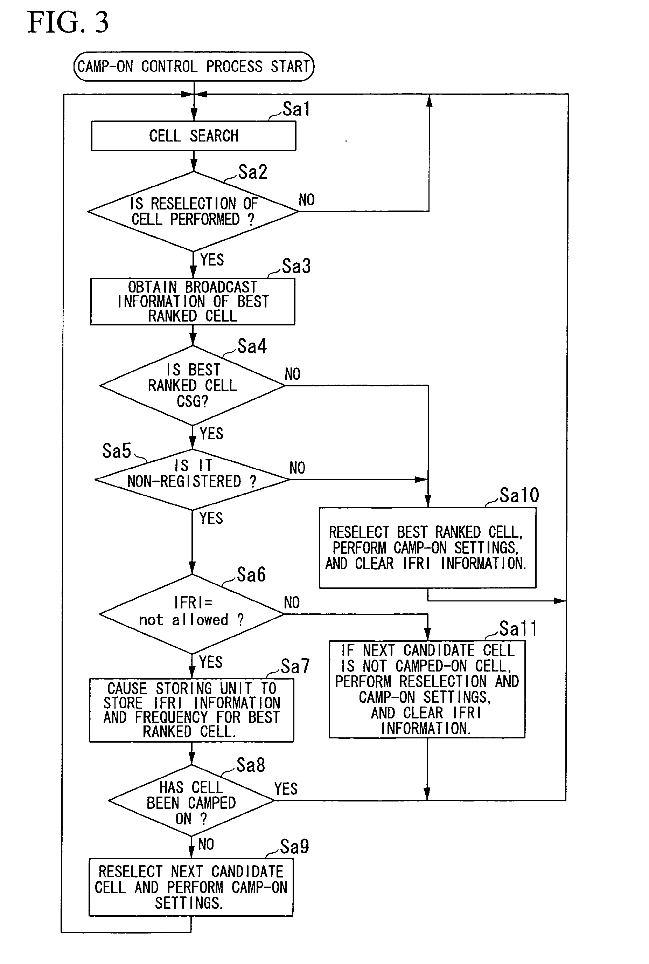

FIG. 3 is a flowchart illustrating operation of the camp-on controller 144. While the mobile station device 10 is in the idle mode, the camp-on controller 144 operates according to the flowchart as shown in FIG. 3. When the mobile station device 10 enters the idle mode, the camp-on controller 144 sets a transmission frequency for a neighboring base station device to the receiver 13, and periodically performs cell search that causes the receiver 13 to measure the reception level of a signal received from the neighboring base station device (Sa1). Based on a result of the cell search, the camp-on controller 144 determines whether or not to perform reselection of a cell (Sa2). For example, the camp-on controller 144 determines to perform reselection of a cell if the receiver 13 having performed the cell search detects the reception level that exceeds, by a predetermined threshold or more, the reception level of a signal received from the base station device currently camped-on.
For simplification of explanation, it has been explained here that determination of whether or not to perform reselection of a cell and determination of a cell to be reselected are performed based on the reception level as the exclusive criterion. However, determination of whether or not to perform reselection of a cell and determination of a cell to be reselected may be performed according to 3GPP TS 36.304 (LTE), TS 25.304 (User equipment (UE) procedures in idle mode and procedures for cell reselection in connected mode), in consideration of not only the reception level, but also other conditions, such as priority according to frequency, the cell type, or the moving speed of a mobile station.
If it is determined that reselection of a cell is not to be performed (Sa2-No), the camp-on controller 144 returns to step Sa1 to periodically perform cell search.

On the other hand, if it is determined that reselection of a cell is to be performed (Sa2-Yes), the camp-on controller 144 sets the transmission frequency for the base station device to the receiver 13 so that the receiver 13 receives a signal including broadcast information from the base station device determined as the best ranked cell, as a result of the cell search. Then, the camp-on controller 144 obtains the broadcast information received by the receiver 13 (Sa3). Here, the best ranked cell means a cell having the highest value that is an evaluation criterion for determining a cell to be reselected. Based on the obtained broadcast information, the camp-on controller 144 determines whether or not the best ranked cell is a CSG cell (Sa4). For example, if the mobile communication system according to the first embodiment is an LTE system, whether or not the best ranked cell is a CSG cell is determined based on csg-Indication and csg-Identity which are information elements of SystemInformationBlockType1 included in the broadcast information.

If it is determined that the best ranked cell is a CSG cell, the camp-on controller 144 determines whether or not the mobile station device 10 has been registered on a base station device serving that CSG cell (Sa5). For example, the camp-on controller 144 reads a CSG list from the storing unit 15. If information indicating a base station device serving the CSG cell is included in the CSG list, the camp-on controller 144 determines that the registration has been made. If the information is not included, the camp-on controller 144 determines that the registration has not been made. For example, this CSG list is previously set by a user.

If it is determined in step Sa4 that the best ranked cell is not a CSG cell (Sa4-No), and if it is determined in step Sa5 that the mobile station device 10 has been registered (not unregistered) (Sa5-No), the camp-on controller 144 reselects the base station device determined to be the best ranked cell, and camps on the base station device (Sa10). Additionally, the camp-on controller 144 clears the IFRI information stored by the storing unit 15, and returns to step Sa1. On the other hand, if it is determined in step Sa5 that the mobile station device 10 has not been registered (Sa5-Yes), the camp-on controller 144 reads the IFRI from the broadcast information obtained in step Sa3, and determines whether or not the IFRI is set to be "not allowed" (prohibiting a cell having the same frequency from being reselected) (Sa6). If it is determined that the IFRI is not set to be "not allowed" (Sa6-No), and if a cell determined to be the second best ranked cell is not a cell currently camped on, the camp-on controller 144 reselects a base station device serving that cell, and camps on the base station device (Sa11). Additionally, the camp-on controller 144 clears the IFRI information stored by the storing unit 15, and returns to step Sa1.

If it is determined in step Sa6 that the IFRI is set to be "not allowed" (Sa6-Yes), the camp-on controller 144 causes the storing unit 15 to store IFRI information indicating that the IFRI is set to be "not allowed," and information indicating the frequency for the best ranked cell (Sa7). Further, the camp-on controller 144 determines whether or not the mobile station device 10 is camping on a cell (Sa8). For example, if it is determined that the mobile station device 10 is not camping on a cell, for example, at the time immediately after the power-on (Sa8-No), the camp-on controller 144 reselects the base station device determined to be the second best ranked cell as a result of the cell search, camps on that base station device (Sa9), and then returns to step Sa1. If it is determined that the mobile station device 10 is camping on a cell (Sa8-Yes), the camp-on controller 144 returns to step Sa1.

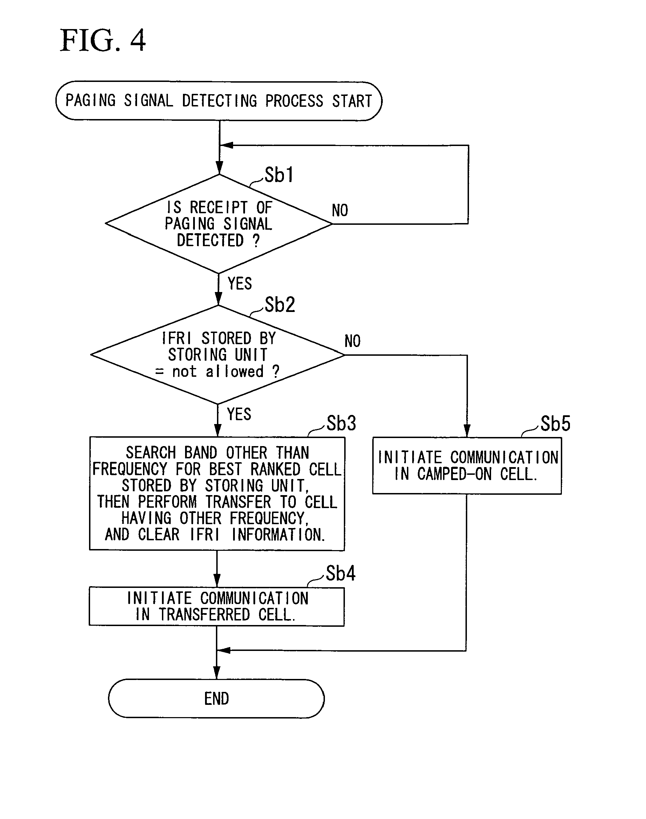

FIG. 4 is a flowchart illustrating operation of the paging signal detector 143. The paging signal detector 143 operates according to the flowchart shown in FIG. 4 while the mobile station device 10 is in the idle mode. When the mobile station device 10 enters the idle mode, the paging signal detector 143 waits for the receiver 13 to detect a receipt of the paging signal (Sb1). Upon detecting a receipt of the paging signal (Sb1-Yes), the paging signal detector 143 reads the IFRI information that the camp-on controller 144 has caused the storing unit 15 to store, and determines whether or not the IFRI has been set to be "not allowed" (Sb2). If it is determined that the IFRI has not been set to be "not allowed," such as if the storing unit 15 does not store the IFRI information, or if the stored IFRI information indicates that the IFRI has been set to be "allowed" (Sb2-No), the paging signal detector 143 performs a process of receiving an incoming call in the cell currently camped on, causes the communication processor 142 to initiate communication with the base station device serving that cell (Sb5), and then terminates the process.

If it is determined that the IFRI has been set to be "not allowed" (Sb2-Yes), the paging signal detector 143 reads the frequency used for the best ranked cell, which the camp-on controller 144 has caused the storing unit 15 to store in step Sa7 shown in FIG. 3. Then, the paging signal detector 143 sets a frequency other than the read frequency to the receiver 13, and performs cell search that causes the receiver 13 to measure the reception level of a signal received from a neighboring base station. For example, the paging signal detector 143 sets a transmission and reception frequency for the best ranked cell determined as a result of that cell search to the transmitter 12 and the receiver 13, and then performs a transfer to that cell (Sb3). The paging signal detector 143 causes the communication processor 142 to initiate communication with the base station device serving the transferred cell (Sb4), and then terminates the process.

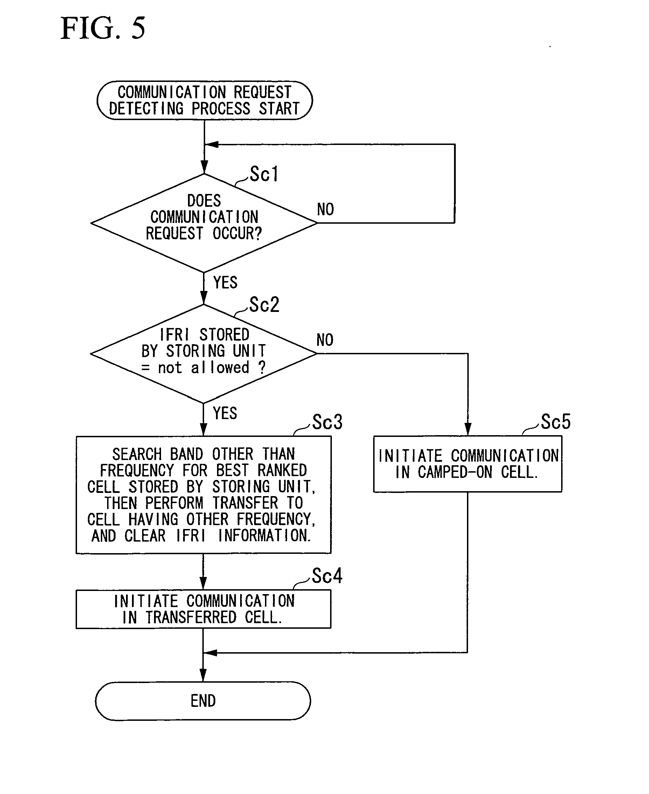

FIG. 5 is a flowchart illustrating operation of the communication request detector 141. While the mobile station device 10 is in the idle mode, the communication request detector 141 operates according to the flowchart as shown in FIG. 5. When the mobile station device 10 enters the idle mode, the communication request detector 141 waits for the UI unit 16 to detect occurrence of a communication request (Sc1). Upon detecting occurrence of a communication request (Sc1-Yes), the communication request detector 141 reads the IFRI information that the camp-on controller 144 has caused the storing unit 15 to store in step Sa7 shown in FIG. 3, and determines whether or not the IFRI has been set to be "not allowed" (Sc2). If it is determined that the IFRI has not been set to be "not allowed," such as in a case that the storing unit 15 has not stored the IFRI information or in a case that the stored IFRI information indicates that the IFRI has been set to be "allowed" (Sc2-No), the communication request detector 141 performs a transmission process in the cell currently camped on. Then, the communication request detector 141 causes the communication processor 142 to initiate communication with a base station device serving that cell (Sc5), and terminates the process.

If it is determined in step Sc2 that the IFRI has been set to be "not allowed" (Sc2-Yes), the communication request detector 141 reads the frequency for the best ranked cell that the camp-on controller 144 has caused the storing unit 15 to store in step Sa7 shown in FIG. 3. Then, the communication request detector 141 sets a frequency other than that read frequency to the receiver 13, and performs a cell search that causes the receiver 13 to measure the reception level of a signal received from a neighboring base station device. For example, the communication request detector 141 sets to the transmitter 12 and the receiver 13, a transmission and reception frequency for the best ranked cell determined as a result of the cell search, and then performs a transfer to that cell (Sc3). The communication request detector 141 causes the communication processor 142 to initiate communication with a base station device serving that transferred cell (SC4), and terminates the process.

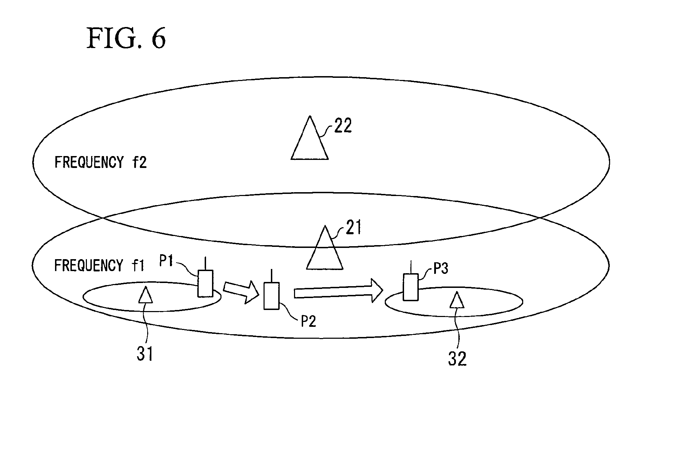

FIG. 6 is a diagram illustrating an example of a traveling route for the mobile station device 10. In the example of the traveling route shown in FIG. 6, the mobile station device 10 moves from a point P1 in a cell served by the CSG base station device 31 to a point P2 outside that cell, and then moves to a point P3 in a cell served by the CSG base station device 32. Operation of the mobile station device 10 traveling such a route is explained here. When the mobile station device 10 is present at the point P1 shown in FIG. 6 that is included in the cell served by the CSG base station device 31, the mobile station device 10 is not registered on that cell. For this reason, the mobile station device 10 camps on the base station device 21 for a macro cell using the same frequency f1. In this case, the camp-on controller 144 operates according to the flowchart shown in FIG. 3.

In other words, firstly, the camp-on controller 144 performs cell search, and determines to perform reselection of a cell in step Sa2 (Sa2-Yes). Thus, the best ranked cell, that is, the base station device selected as a base station device to be reselected, is the CSG base station device 31. For this reason, the camp-on controller 144 determines in step Sa4 that the best ranked cell is the CSG cell (Sa4-Yes). Further, in step Sa5, the CSG base station device 31 selected as a base station device to be reselected is not included in the CSG list. For this reason, the camp-on controller 144 determines that the base station device is a base station device that the mobile station device 10 cannot camp on, that is, a base station device having not been registered (Sa5-Yes). Moreover, the CSG base station device 31 has reported the IFRI=not allowed, and therefore has reported in step Sa6 an indication which prohibits reselection of a base station device using the same frequency. In other words, the camp-on controller 144 determines that the IFRI is set to be "not allowed" (Sa6-Yes). Then, the camp-on controller 144 determines in step Sa8 that the mobile station device is camping on (Sa8-Yes), and returns back to step Sa1 to repeat cell search. In other words, even if "not allowed" is reported, a base station device having a frequency different from the frequency determined as "not allowed" is not immediately reselected.

On the other hand, the paging signal detector 143 operates according to the flowchart shown in FIG. 4. For this reason, the paging signal detector 143 continues to monitor whether or not the receiver 13 receives a paging signal, until the receiver 13 receives the paging signal. At the same time, the communication request detector 141 operates according to the flowchart shown in FIG. 5. For this reason, the communication request detector 141 continues to monitor whether or not the UI unit 16 makes a communication request, until the communication request made by the UI unit 16 is detected.
If a receipt of the paging signal is detected while the mobile station device 10 is present in the cell served by the CSG base station device 31, it is determined in step Sb2 that the IFRI has been set to be "not allowed" (Sb2-Yes), and the IFRI is applied. In other words, a frequency other than the frequency for the best ranked cell (CSG base station device 31) stored by the storing unit 15 is not searched until "not allowed" is reported by the IFRI. Then, a transfer to the best ranked cell determined as a result of the search is performed, and communication is initiated. Also in case that a communication request is detected, the IFRI is applied similarly.
As explained above, even if "not allowed" is reported, a base station device having a frequency different from the frequency determined as "not allowed" is not immediately reselected, and application of the indication "not allowed" is delayed until a receipt of the paging signal is detected.

In case that the mobile station device 10, by delaying application of indication, moves to the point P2 outside the CSG base station device 31 or the point P3 inside the cell served by the CSG base station device 32 while performing those monitoring processes, the best ranked cell is the base station device 21 or 22, or the CSG base station device 32 as a result of the cell search in step Sa1 shown in FIG. 3, and base station device is reselected in step Sa1. Thus, it is possible to perform camp-on settings. In other words, irrespective of whether or not a frequency is the same as that for the CSG base station device 31 originally determined as the best ranked cell, the base station device most adequate as a base station device to be reselected is reselected, and thereby camp-on settings are made. Accordingly, it is possible to prevent a transfer to a base station device using a frequency different from that of the CSG base station device 31 from being performed forcibly, which causes deterioration of service quality. At the time of reselection in step Sa10, the IFRI information is cleared. For this reason, even if a paging signal is received, a communication request is made, or the mobile station device 10 performs transmission thereafter, the mobile station device 10 does not apply the IFRI.

Here, the transfer to the cell performed in steps Sb3 and Sc3 may be performed by a procedure similar to that of the reselection in the idle mode, or by a procedure similar to the handover procedure after the mobile station device 10 enters a connected mode.
Additionally, the timing of clearing the IFRI information may be set to the time the base station device having transmitted the IFRI constituting the IFRI information becomes the non-best ranked cell as a result of the cell search in step Sa1, that is, the time the best ranked cell is changed from the result of the previous cell search.
Further, it has been explained that the camp-on controller 144 causes the storing unit 15 to store the frequency for the best ranked cell. However, CSG_ID may be stored instead of storing the frequency, and the frequency may be obtained from broadcast information.

Thus, the IFRI to be transmitted from the mobile station device 10 causing interference is monitored at the time of communication. If "not allowed" is reported, a transfer to a cell having a different frequency is forcibly performed according to the IFRI, thereby preventing unnecessary interference from affecting the base station device having reported the IFRI. Additionally, when a paging signal is not received or when a communication request is not made (i.e., there is no calling), it is possible to leave as many opportunities as possible to search other base stations including a base station device using the same frequency (specifically, the CSG base station device).

Regarding Non-Patent Document 3, if the timer expires, reselection with respect to the same frequency is limited for a predetermined duration similarly to Non-Patent Document 4, and therefore a base station device using a different frequency is reselected. For this reason, reselection cannot be made even if accessible intra frequency CSG cells are present at a near place, thereby occasionally causing deterioration of service quality. According to the present invention, however, the timing of applying the indication of prohibition corresponds to the time a mobile station initiates transmission. For this reason, the mobile station camps on the cell having the same frequency irrespective of the expiration of the timer, thereby preventing deterioration of service quality.

### [Second Embodiment]

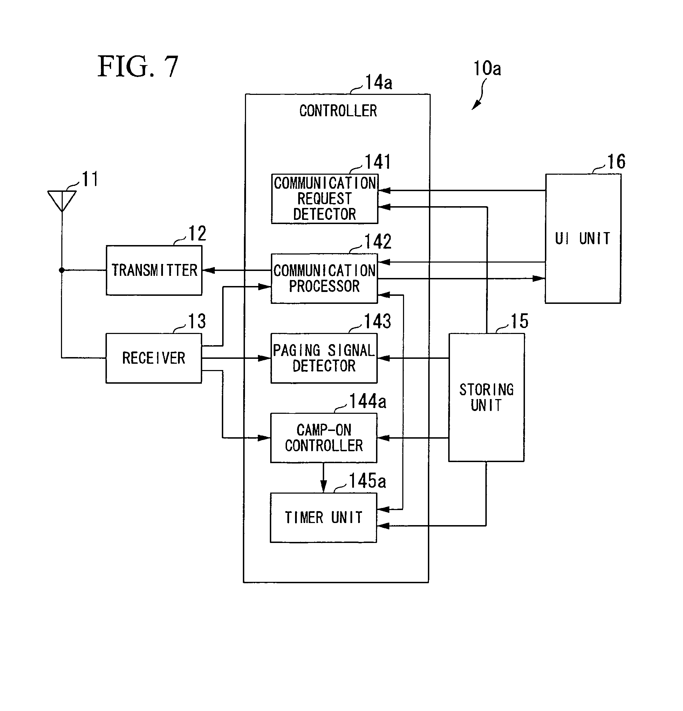

Hereinafter, a second embodiment of the present invention is explained with reference to the drawings. A mobile communication system according to the second embodiment differs from that of the first embodiment in that a mobile station device 10a is included in lieu of the mobile station device 10. FIG. 7 is a schematic block diagram illustrating a configuration of the mobile station device 10a according to the second embodiment. In FIG. 7, the same reference numerals (11 to 13, 15, 16, and 141 to 143) are appended to units corresponding to those shown in FIG. 2, and explanations thereof are omitted here. The mobile station device 10a includes: the antenna 11; the transmitter 12; the receiver 13; a controller 14a; the storing unit 15; and the UI (User Interface) unit 16. The controller 14a includes: the communication request detector 141; the communication processor 142; the paging signal detector 143; a camp-on controller 144a; and a timer unit 145a. The camp-on controller 144a differs from the camp-on controller 144a shown in FIG. 2 in that the camp-on controller 144a activates the timer 145a at the time of causing the storing unit 15 to store IFRI information and a frequency for the best ranked cell (step Sa7 shown in FIG. 3). Upon activated by the camp-on controller 144a, the timer unit 145a counts time until a counted value reaches a predetermined timer value. When the timer value expires, the timer unit 145a performs a transfer to another frequency and clears the IFRI information stored by the storing unit 15.

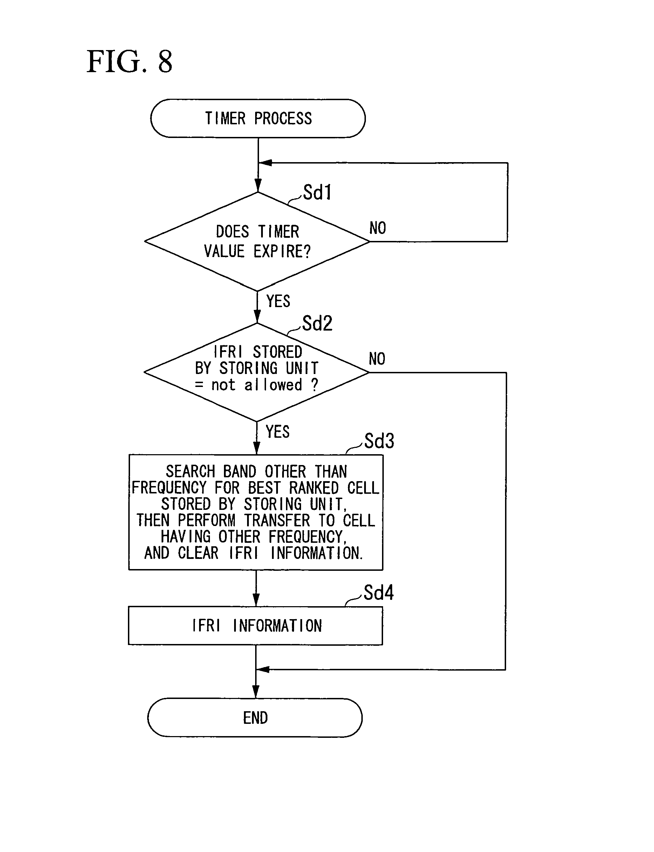

FIG. 8 is a flowchart illustrating operation of the timer unit 145a. Upon activated by the camp-on controller 144a, the timer unit 145a waits for the timer value to expire (Sd1). If the timer value expires (Sd1-Yes), the timer unit 145a refers to the IFRI information stored in the storing unit 15, and determines whether or not "not allowed" is set. If it is determined that "not allowed" is not set (Sd2-No), the process ends.
On the other hand, it is determined in step Sd1 that "not allowed" is set (Sd2-Yes), the timer unit 145a reads a frequency for the best ranked cell stored by the storing unit 15, sets a frequency other than the read frequency to the receiver 13, and performs cell search that causes the receiver 13 to measure the reception level of a signal received from a neighboring base station device. For example, the timer 145a sets to the transmitter 12 and the receiver 13, a transmission and reception frequency for the best ranked cell determined as a result of that cell search, and performs a transfer to that cell (Sd3). Then, the timer unit 145a clears the IFRI information stored by the storing unit 15 (Sd4), and terminates the process.

Here, also in the second embodiment, a paging signal is received, and if an incoming call is received, operation similar to that shown in FIG. 4 is initiated without waiting for the timer value of the timer unit 145a to expire, as long as the following conditions are met. Such conditions are that the time is before the timer value of the timer unit 145a expires, and the IFRI information stored by the storing unit 15 indicates "not allowed." In this case, the mobile station device 10a camps on a cell having the same frequency as that for the best ranked cell which is stored by the storing unit 15. This case occurs, for example, when the mobile station device 10a stays in the cell 31 shown in FIG. 6 for a while.
Additionally, if similar conditions are met and if a communication request from the mobile station device 10a is detected, operation similar to that shown in FIG. 5 is initiated without waiting for the timer value of the timer unit 145 to expire.

Thus, even in a case that the timer unit 145 controls its timer to leave as many as possible opportunities to search other base station devices including a base station device using the same frequency (specially, the CSG base station device) until the timer value expires even if the IFRI information indicates "not allowed", IFRI to be transmitted from the base station device 10 causing interference is monitored at the time of communication. Then, if "not allowed" is reported, a transfer to a cell using a different frequency is forcibly performed according to the IFRI, thereby preventing unnecessary interference with the base station device having reported the IFRI. When a paging signal is not received (i.e., there is no incoming call) or when a communication request is not made (i.e., there is no outgoing call), it is possible to leave as many as possible opportunities to search other base stations including a base station device using the same frequency (specifically, the CSG base station device).

### [Third Embodiment]

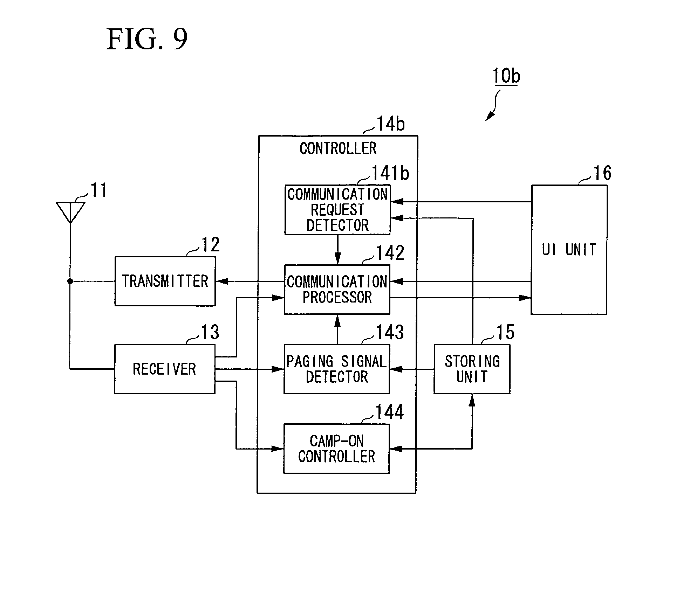

Hereinafter, a third embodiment of the present invention is explained with reference to the drawings. A mobile communication system according to the third embodiment differs from that of the first embodiment in that a mobile station device 10b is included in lieu of the mobile station device 10. FIG. 9 is a schematic block diagram illustrating a configuration of the mobile station device 10b according to the third embodiment. In FIG. 9, the same reference numerals (11 to 13, 15, 16, and 142 to 144) are appended to units corresponding to those shown in FIG. 2, and explanations thereof are omitted here. The mobile station device 10b includes: the antenna 11; the transmitter 12; the receiver 13; a controller 14b; the storing unit 15; and the UI (User Interface) unit 16. The controller 14b includes: a communication request detector 141b; the communication processor 142; the paging signal detector 143; and the camp-on controller 144. Similar to the communication request detector 141 shown in FIG. 2, the communication request detector 141 b detects that a request for transmission to a base station device is made by an input by a user operation via the UI unit 16, such as operation of sending a mail or operation of making a telephone call. However, upon detecting a communication request, the communication request detector 141 b refers to the IFRI information stored by the storing unit 15. If the IFRI information indicates "not allowed," the communication request detector 141b gives a user via the UI unit 16, a notification that transmission is impossible, which is the difference from the communication request detector 141 shown in FIG. 2.

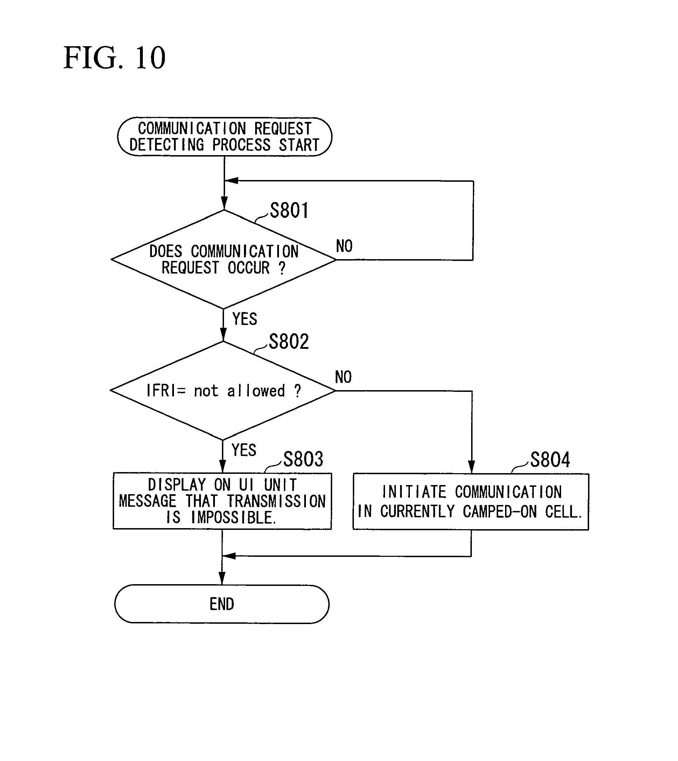

FIG. 10 is a flowchart illustrating operation of the communication request detector 141b. In other words, upon detecting a communication request (S801), the communication request detector 141b determines whether or not the IFRI information stored by the storing unit 15 indicates "not allowed" (S802). If the IFRI information does not indicate "not allowed" as a result of the determination shown in step S802 (S802-No), the communication request detector 141b initiates communication in a cell camped on at that time (S804), and terminates the process. On the other hand, if the IFRI information indicates "not allowed" as a result of the determination in step S802 (S802-Yes), the communication request detector 141b gives a user, by displaying on the UI unit 16, the notification that transmission is impossible, does not perform communication, and then terminates the process.

Thus, the IFRI to be transmitted from the mobile station device 10 causing interference is monitored at the time of communication, and if "not allowed" is reported, the notification that transmission is impossible is given to a user according to the IFRI, and communication is not performed, thereby preventing unnecessary interference.

Additionally, a computer-readable recording medium may store a program for implementing the functions of: the controller 14 shown in FIG. 2; the controller 14a shown in FIG. 7; and the controller 14b shown in FIG. 9, so that a computer system reads and executes the program stored in the recording medium to perform the processes of the controllers 14. Here, the "computer systems" include OS and hardware, such as a peripheral device.

Further, the "computer-readable recording medium" indicates a storage device, which includes a portable medium such as a flexible disc, a magneto-optical disc, a ROM, and a CD-ROM, and a storage device such as a hard disk built in the computer system. Additionally, the "computer-readable recording medium" may include a medium that dynamically stores a program for a short period of time, such as a communication line used when a program is transmitted via a network such as the Internet or a communication line such as a telephone line. Additionally, the "computer readable recording medium" may include a medium that stores a program for a predetermined period of time, such as a volatile memory built in a computer system serving as a server or client when the program is transmitted via a network such as the Internet or a communication line such as a telephone line. Moreover, the program may be a program for implementing part of the aforementioned functions. Further, the program may be a program that can implement the aforementioned functions in combination with a program already recorded in the computer system.

Embodiments of the present invention have been explained above in detail with reference to the drawings. However, the specific configuration is not limited thereto. Various modifications may be made without departing from the scope of the present invention.

### DESCRIPTION OF REFERENCE NUMERALS

- 10, 10a, 10b:: mobile station device
- 11:: antenna
- 12:: transmitter
- 13:: receiver
- 14, 14a, 14b:: controller
- 15:: storing unit
- 16:: UI unit
- 141, 141b:: communication request detector
- 142:: communication processor
- 143:: paging signal detector
- 144, 144a:: camp-on controller
- 145a:: timer unit
- 21, 22:: base station device
- 31, 32:: CSG base station device

## Claims

1. A mobile station device configured to wirelessly communicate with a plurality of base station devices,
wherein in case that a base station device selected as a base station device to be reselected is a base station device on which the mobile station device is prohibited to camp, and has reported an indication of prohibition to reselect a base station device using the same frequency, the mobile station device is configured to delay application of the indication of prohibition, and to apply the indication of prohibition when the mobile station device performs transmission.

2. The mobile station device according to claim 1, wherein in case that the mobile station device delays application of the indication of prohibition and performs transmission, the mobile station device is configured to select a base station device targeted for the transmission, from among a plurality of base station devices using frequencies different from the frequency used by the base station device selected as the base station device to be reselected.

3. The mobile station device according to claim 1, wherein the mobile station device is configured not to apply the indication of prohibition in case that the base station device selected as the base station device to be reselected is a base station device on which the mobile station device is allowed to camp.

4. The mobile station device according to claim 1, wherein the transmission from the mobile station device is based on a paging signal from a base station device on which the mobile station device currently camps.

5. The mobile station device according to claim 1, wherein the transmission from the mobile station device is based on a request for communication with the base station device, which is made by the mobile station device.

6. The mobile station device according to claim 1, wherein in case that the mobile station device delays application of the indication of prohibition and a predetermined duration elapses, the mobile station device is configured to apply the indication of prohibition.

7. The mobile station device according to claim 1, wherein in case that the base station device selected as the base station device to be reselected is a base station device on which the mobile station device is prohibited to camp, and has reported the indication of prohibition to reselect a base station device using the same frequency, and in case that a transmission request is made from the mobile station device, and the transmission request is made by a user operating the mobile station device, the mobile station device is configured to give the user a notification that transmission is impossible.

8. A mobile communication system comprising:
a plurality of base station devices; and
a mobile station device configured to wirelessly communicate with a plurality of base station devices,
wherein in case that a base station device selected as a base station device to be reselected is a base station device on which the mobile station device is prohibited to camp, and has reported an indication of prohibition to reselect a base station device using the same frequency, the mobile station device is configured to delay application of the indication of prohibition, and to apply the indication of prohibition when the mobile station device performs transmission.

9. A program causing a computer of a mobile station device configured to wirelessly communicate with a plurality of base station devices to execute:
a process of, in case that a base station device selected as a base station device to be reselected is a base station device on which the mobile station device is prohibited to camp, and has reported an indication of prohibition to reselect a base station device using the same frequency, delaying application of the indication of prohibition and applying the indication of prohibition when the mobile station device performs transmission.
